# EUROPÄISCHE PATENTANMELDUNG

(11) **EP 2 960 530 A1**
(43) Veröffentlichungstag der Anmeldung: **30.12.2015**
(21) Anmeldenummer: 14174719.6
(22) Anmeldetag: 27.06.2014
(51) Int. Cl.: F16B 5/02, F16B 19/02

(54) **Montageverfahren für eine elektrische Maschine mit zumindest zwei Maschinensegmenten**

(71) Anmelder: Siemens Aktiengesellschaft, 80333 München (DE)
(72) Erfinder: Hartmann, Ulrich, 14197 Berlin (DE); Kümmlee, Horst, 13505 Berlin (DE); Plehm, Sebastian, 10247 Berlin (DE)

(57) **Zusammenfassung**

Die Erfindung betrifft ein Verfahren zur Montage einer elektrischen Maschine und eine entsprechend montierte Maschine, wobei die elektrische Maschine zumindest zwei Maschinensegmente (1, 2) mit jeweils einer Bohrung aufweist wobei die erste Bohrung (5) einen größeren Durchmesser (15) als die zweite Bohrung (6) aufweist und die erste Bohrung (5) und die zweite Bohrung (6) derart exzentrisch zueinander angeordnet sind, dass bei einer Anordnung des jeweiligen Maschinensegmentes (1, 2) an der jeweiligen Segmentposition eine Projektion der ersten Bohrung (5) auf die jeweilige zweite Anlagefläche (4) die zweite Bohrung (6) vollständig abdeckt.

## Beschreibung

Die Erfindung betrifft ein Verfahren zur Montage einer elektrischen Maschine, wobei die elektrische Maschine zumindest zwei Maschinensegmente aufweist, welche relativ zueinander an einer jeweiligen Segmentposition angeordnet sind, wobei ein erstes Maschinensegment zumindest eine erste Anlagefläche und ein zweites Maschinensegment zumindest eine zweite Anlagefläche aufweisen, wobei das erste Maschinensegment und das zweite Maschinensegment derart ausgestaltet sind, dass das an seiner jeweiligen Segmentposition angeordnete erste Maschinensegment und zweite Maschinensegment an der jeweiligen ersten Anlagefläche und der jeweiligen zweiten Anlagefläche miteinander verbindbar sind. Weiterhin betrifft die Erfindung eine derartige elektrische Maschine.

Ein derartiges Verfahren bzw. eine derartige elektrische Maschine kommen beispielsweise bei großen und leistungsstarken Antriebsmotoren von Mühlenantrieben im Einsatz. Große elektrische Maschinen bestehen oftmals aus einer Vielzahl von Bauteilen und -gruppen, die miteinander in geeigneter Weise verbunden sind, z.B. mit Hilfe von Schraubenverbindungen. Aufgrund der häufig unterschiedlichen Steifigkeiten der zu verbindenden Bauteile und dem Auftreten von dynamischen Lasten, die eine Vorzugsrichtung aufweisen, kann es im Betrieb zu sogenanntem Mikroschlupf kommen. Dabei bewegt sich eine Komponente gegenüber der anderen in Lastrichtung. Diese Bewegung wird bei Lastrichtungsumkehr nicht vollständig zurückgeführt, so dass sich über eine längere Betriebszeit ein Auswandern von bestimmten Baugruppen einstellen kann. Das Auswandern kann somit als eine Art Kriechen verstanden werden.

Um das Auswandern zu verhindern, sind die Bauteile neben den Verschraubungen zusätzlich mit formschlüssigen Elementen, wie zum Beispiel Stiften gesichert. Um zu gewährleisten, dass die Stifte in beiden Bauteilen optimal im Kontakt sind, werden die Stiftlöcher erst im montierten Zustand gebohrt oder aufgerieben. Dies führt bei der Montage, insbesondere bei einer Serienfertigung, zu hohen Mehraufwendungen. Darüber hinaus stellt die spanabhebende Bearbeitung ein Risiko dar, wenn die Metallspäne in den elektrisch aktiven Teil der Maschine gelangen.

Der Erfindung liegt die Aufgabe zugrunde, den Montageaufwand insbesondere für große, segmentierte elektrische Maschinen zu verringern.

Diese Aufgabe wird durch ein Verfahren der eingangs genannten Art dadurch gelöst, dass das Verfahren die folgenden Verfahrensschritte aufweist:
- Herstellen der zumindest zwei Maschinensegmente an einem Herstellungsort der zumindest zwei Maschinensegmente,
- Einbringen zumindest einer ersten Bohrung in das erste Maschinensegment im Bereich der jeweiligen ersten Anlagefläche und zumindest einer zweiten Bohrung in das zweite Maschinensegment im Bereich der jeweiligen zweiten Anlagefläche am Herstellungsort,
wobei die jeweilige erste Bohrung einen größeren Durchmesser als die jeweilige zweite Bohrung aufweist und die jeweilige erste Bohrung und die jeweilige zweite Bohrung derart exzentrisch zueinander angeordnet sind, dass bei einer Anordnung des jeweiligen Maschinensegmentes an der jeweiligen Segmentposition eine Projektion der jeweiligen ersten Bohrung auf die jeweilige zweite Anlagefläche die jeweilige zweite Bohrung vollständig abgedeckt,
- Transport der zumindest zwei Maschinensegmente zum Montage- und/oder Betriebsort der elektrischen Maschine,
- Anordnen des jeweiligen Maschinensegmentes an der jeweiligen Segmentposition am Montage- und/oder Betriebsort,
- Verbinden des ersten Maschinensegmentes mit dem zweiten Maschinensegment durch Einbringung eines jeweiligen Verbindungselementes in die jeweilige erste Bohrung und die jeweilige zweite Bohrung am Montage- und/oder Betriebsort,
wobei das jeweilige Verbindungselement ein jeweiliges erstes Verbindungselement, welches in die jeweilige erste Bohrung eingebracht wird, und ein jeweiliges zweites Verbindungselement aufweist, welches exzentrisch zum ersten Verbindungselement angeordnet ist und in die jeweilige zweite Bohrung eingebracht wird.

Weiterhin wird diese Aufgabe durch eine elektrische Maschine der eingangs genannten Art dadurch gelöst, dass zumindest eine erste Bohrung in das erste Maschinensegment im Bereich der jeweiligen ersten Anlagefläche und zumindest eine zweite Bohrung in das zweite Maschinensegment im Bereich der jeweiligen zweiten Anlagefläche eingebracht sind, wobei die jeweilige erste Bohrung einen größeren Durchmesser als die jeweilige zweite Bohrung aufweist und die jeweilige erste Bohrung und die jeweilige zweite Bohrung derart exzentrisch zueinander angeordnet sind, dass bei einer Anordnung des jeweiligen Maschinensegmentes an der jeweiligen Segmentposition eine Projektion der jeweiligen ersten Bohrung auf die jeweilige zweite Anlagefläche die jeweilige zweite Bohrung vollständig abgedeckt, wobei die elektrische Maschine ein jeweiliges Verbindungselement aufweist, mittels welchem das erste Maschinensegment mit dem zweiten Maschinensegment verbunden ist, indem das jeweilige Verbindungselement in die jeweilige erste Bohrung und die jeweilige zweite Bohrung eingebracht ist, wobei das jeweilige Verbindungselement ein jeweiliges erstes Verbindungselement, welches in die jeweilige erste Bohrung eingebracht ist, und ein jeweiliges zweites Verbindungselement aufweist, welches exzentrisch zum ersten Verbindungselement angeordnet ist und in die jeweilige zweite Bohrung eingebracht ist.

Gemäß dem vorgeschlagenen Verfahren zur Montage der elektrischen Maschine ist vorgesehen, die zumindest zwei Maschinensegmente am Herstellungsort der zumindest zwei Maschinensegmente herzustellen. Vorzugsweise ist die elektrische Maschine dabei vergleichsweise groß, so dass nicht die gesamte, schon zusammengesetzte Maschine transportiert werden kann, sondern lediglich die einzelnen Maschinensegmente. Üblicherweise handelt es sich bei dem Herstellungsort um eine Fabrik oder eine Werkshalle, welche dazu ausgelegt, ist die Maschinensegmente herzustellen. Der Montage- und oder Betriebsort der elektrischen Maschine befindet sich in der Regel jedoch in einigem Abstand zum Herstellungsort, da die elektrische Maschine beispielsweise in der Nähe eines Bergwerks oder Tagebaus zum Antrieb einer Gesteinsmühle betrieben wird. Unter Umständen können somit mehrere 100 km oder mehr zwischen dem Herstellungsort und dem Montage- und/oder Betriebsort der elektrischen Maschine liegen.

Am Herstellungsort werden schon die jeweilige erste Bohrung und die jeweilige zweite Bohrung in das jeweilige Maschinensegment eingebracht, was mit den am Herstellungsort üblicherweise vorhandenen Maschinen automatisiert und damit kostengünstig machbar ist.

Anschließend werden die jeweiligen Maschinensegmente samt den eingebrachten jeweiligen Bohrungen an den Montage- und/oder Betriebsort der elektrischen Maschine transportiert, wozu beispielsweise Tieflader oder auch Schiffe bei einem Transport über den Seeweg zum Einsatz kommen können.

Am Montage- und/oder Betriebsort werden das erste Maschinensegment und das zweite Maschinensegment gemäß ihrer jeweiligen Segmentposition innerhalb der elektrischen Maschine zueinander angeordnet. Entsprechend liegt die jeweilige erste Anlagefläche an der jeweiligen zweiten Anlagefläche an. Somit deckt auch die Projektion der jeweiligen ersten Bohrung auf die Anlagefläche die jeweilige zweite Bohrung vollständig ab, so dass die jeweilige erste Bohrung und die jeweilige zweite Bohrung zumindest teilweise zueinander fluchtend angeordnet sind. In der Regel sind die jeweilige erste Bohrung und die jeweilige zweite Bohrung exzentrisch zueinander angeordnet, wobei als Spezialfall auch denkbar ist, dass die jeweilige erste Bohrung und die jeweilige zweite Bohrung konzentrisch zueinander angeordnet sind, so dass die Exzentrizität null beträgt. Im Allgemeinen ist die Exzentrizität jedoch von null verschieden.

Zur Verbindung des ersten Maschinensegmentes mit dem zweiten Maschinensegment am Montage- und/oder Betriebsort wird schließlich das jeweilige Verbindungselement in die jeweilige erste Bohrung und die jeweilige zweite Bohrung eingebracht. Dabei weist das jeweilige Verbindungselement das jeweilige erste Verbindungselement und das jeweilige zweite Verbindungselement auf, wobei das jeweilige erste bzw. das jeweilige zweite Verbindungselement in die jeweilige erste bzw. zweite Bohrung eingebracht wird. Das jeweilige erste bzw. das jeweilige zweite Verbindungselement ist hierzu vorzugsweise passend für die jeweilige erste bzw. zweite Bohrung ausgestaltet. Das jeweilige zweite Verbindungselement ist dabei exzentrisch zum jeweiligen ersten Verbindungselement angeordnet, wobei als Spezialfall auch denkbar ist, dass die Exzentrizität null beträgt, so dass das jeweilige zweite Verbindungselement konzentrisch zum jeweiligen ersten Verbindungselement angeordnet ist. Wie oben schon erläutert, ist die Exzentrizität im Allgemeinen jedoch von null verschieden.

Insbesondere kann das jeweilige Verbindungselement, welches ein jeweiliges erstes Verbindungselement und ein jeweiliges zweites Verbindungselement aufweist, einstückig ausgeführt sein. Denkbar ist jedoch auch eine zweistückige oder mehrstückige Ausführung des jeweiligen Verbindungselementes. Weiterhin kann die vorgeschlagene elektrische Maschine auch zwei oder mehr erste Maschinensegmente und/oder zwei oder mehr zweite Maschinensegmente aufweisen und das vorgeschlagene Verfahren entsprechend durchgeführt werden.

Durch das vorgeschlagene Verfahren und die vorgeschlagene elektrische Maschine wird ermöglicht, die jeweilige Bohrung schon am Herstellungsort in die Maschinensegmente einzubringen. Durch die Ausgestaltung des jeweiligen Verbindungselementes können dabei die in der Regel auftretenden Exzentrizitäten bezüglich der jeweiligen ersten Bohrung und der jeweiligen zweiten Bohrung ausgeglichen werden. Dies ermöglicht, die jeweiligen Bohrungen bzw. deren Positionierung am jeweiligen Maschinensegment insbesondere mit einer größeren Fertigungstoleranz einzubringen, so dass Kosten eingespart werden können.

Insbesondere wird am Grundprinzip der Verstiftung festgehalten. Die jeweiligen Bohrungen der jeweiligen Maschinensegmente, die miteinander verstiftet werden sollen, werden noch vor der Endmontage gebohrt. Durch das Einbringen der jeweiligen Bohrungen schon am Herstellungsort und noch vor dem Transport der Maschinensegmente werden insbesondere der Montageaufwand und somit die Kosten bei der Endmontage reduziert. Da es sich bei den jeweiligen Verbindungselementen um vergleichsweise einfache, mechanische Bauteile handelt, sind auch die Kosten der Verbindungselemente vergleichsweise gering.

Weiterhin kann dadurch das Risiko der Verschmutzung der elektrischen Maschine minimiert werden. Dies wird dadurch erreicht, dass die Bohrungen schon vor und nicht während der Endmontage eingebracht werden, so dass während der Endmontage keine Metallspäne durch ein Einbringen der Bohrungen entstehen. Derartige Metallspäne können insbesondere die Aktivteile, die elektrischen Verbindungen und die elektrischen Isolierungen der elektrischen Maschine beschädigen.

Der insbesondere bei elektrischen Großmaschinen auftretende Versatz der jeweiligen Bohrungen kann durch das Einsetzen von entsprechend ausgestalteten, jeweiligen Verbindungselementen, insbesondere durch die Exzentrizität deren jeweiligen zweiten Verbindungselementen relativ zu deren jeweiligen ersten Verbindungselementen, weitgehend minimiert bzw. vollständig kompensiert werden.

Das vorgeschlagene Verfahren ermöglicht somit eine Endmontage der elektrischen Maschine mit vergleichsweise geringem Montageaufwand und mit vergleichsweise geringen Kosten, wobei weiterhin keine spanabhebende Bearbeitungsschritte erforderlich sind. Insbesondere gegenüber so genannten Doppelexzentern ist das vorgeschlagene Verfahren mit einem vergleichsweise geringen Aufwand durchführbar, wobei der erhöhte Aufwand bei Doppelexzentern insbesondere durch deren aufwändige Fertigung und die Sicherung des Exzenterteils gegen ein axiales Auswandern entsteht. Doppelexzenter erlauben, den Teilungsfehler, der durch das unabhängige Bohren der Stiftlöcher entstanden ist, durch Verdrehen der Exzenterachsen auszugleichen, wobei der Stift anschließend in den Exzenter eingeschoben werden kann.

Bei einer vorteilhaften Ausgestaltung der Erfindung wird am Montage- und/oder Betriebsort eine erste Mehrzahl von Verbindungselementen mit unterschiedlichen Exzentrizitäten des jeweiligen zweiten Verbindungselementes in Bezug zum jeweiligen ersten Verbindungselement bereitgehalten.

Bezüglich der relativen Lage der jeweiligen zweiten Bohrung in Bezug auf die jeweilige erste Bohrung ist lediglich wichtig, dass die Projektion der jeweiligen ersten Bohrung auf die zweite Anlagefläche die jeweilige zweite Bohrung vollständig abgedeckt. Insbesondere wenn mehrere erste und zweite Bohrungen vorgesehen sind bzw. sich die elektrische Maschine aus mehreren Maschinensegmenten zusammensetzt, können so jeweilige Verbindungselemente mit ganz unterschiedlichen Exzentrizitäten erforderlich sein. Insbesondere durch die Fertigungstoleranzen ist die Exzentrizität der unterschiedlichen Bohrungen nicht konstant.

Dadurch, dass die erste Mehrzahl von Verbindungselementen am Montage- und/oder Betriebsort bereitgehalten wird, wird somit eine reibungslose Montage der elektrischen Maschine gewährleistet, unabhängig davon, wie groß sich die einzelnen Exzentrizitäten darstellen. Die erste Mehrzahl ist beispielsweise derart zu wählen, dass stets ein ausreichender Satz von geeigneten Verbindungselementen vorrätig ist.

Bei einer alternativen vorteilhaften Ausgestaltung der Erfindung sind das jeweilige erste Verbindungselement und das jeweilige zweite Verbindungselement des jeweiligen Verbindungselementes zweistückig oder mehrstückig ausgeführt, wobei das jeweilige erste Verbindungselement eine jeweilige dritte Bohrung aufweist, welche im Wesentlichen den gleichen Durchmesser wie die jeweilige zweite Bohrung aufweist, wobei das jeweilige erste Verbindungselement derart in die jeweilige erste Bohrung eingebracht wird bzw. ist, dass eine Projektion der jeweiligen dritten Bohrung auf die zweite Anlagefläche mit der jeweiligen zweiten Bohrung im Wesentlichen in Deckung kommt bzw. ist, wobei das erste Maschinensegment mit dem zweiten Maschinensegment durch Einbringung des jeweiligen zweiten Verbindungselementes in die jeweilige zweite Bohrung und die jeweilige dritte Bohrung verbunden wird bzw. ist.

Bei den jeweiligen ersten Verbindungselement und dem jeweiligen zweiten Verbindungselement handelt es sich somit um zumindest zwei separate Bauteile, welche jedoch zusammen das jeweilige Verbindungselement darstellen. Zur Verbindung zweier Maschinensegmente am Montage- und/oder Betriebsort wirken das jeweilige erste Verbindungselement und das jeweilige zweite Verbindungselement insbesondere wie folgt zusammen. Das jeweilige erste Verbindungselement ist derart ausgestaltet, dass es in die jeweilige erste Bohrung eingebracht werden kann und weist dabei eine jeweilige dritte Bohrung auf. Dabei hat die jeweilige dritte Bohrung in etwa den gleichen Durchmesser wie die jeweilige zweite Bohrung, wobei die jeweilige dritte Bohrung in der Regel exzentrisch in Bezug auf das jeweilige erste Verbindungselement angeordnet ist. Prinzipiell ist dabei auch eine Exzentrizität von null denkbar, so dass die jeweilige dritte Bohrung konzentrisch zum jeweiligen ersten Verbindungselement angeordnet ist.

Das jeweilige erste Verbindungselement wird nun derart in die jeweilige erste Bohrung eingebracht, dass die Projektion der jeweiligen dritten Bohrung auf die zweite Anlagefläche mit der jeweiligen zweiten Bohrung im Wesentlichen in Deckung kommt. Dies wird insbesondere dadurch erreicht, dass die jeweilige dritte Bohrung und die jeweilige zweite Bohrung zueinander fluchtend angeordnet werden. Das erste Maschinensegment und das zweite Maschinensegment werden schließlich dadurch miteinander verbunden, dass das jeweilige zweite Verbindungselement in die jeweilige zweite Bohrung und die jeweilige dritte Bohrung eingebracht wird.

Insbesondere wenn mehrere unterschiedlich große erste und/oder zweite Bohrungen zur Verbindung von Maschinensegmenten vorgesehen sind, bietet die Aufteilung des jeweiligen Verbindungselementes in separate erste und zweite Verbindungselemente einige Vorteile. Denn die Gesamtheit aller möglichen Kombinationen von unterschiedlich großen ersten Bohrungen mit unterschiedlich großen zweiten Bohrungen kann besonders leicht abgebildet werden, indem entsprechend ausgestaltete erste Verbindungselemente und entsprechend ausgestaltete zweite Verbindungselemente miteinander kombiniert werden. Beispielsweise weisen die ersten bzw. zweiten Verbindungselemente somit unterschiedliche Außendurchmesser auf. Da die jeweilige dritte Bohrung im Wesentlichen gleich groß wie die zweite Bohrung ist, kann das jeweilige zweite Verbindungselement beispielsweise Adapterringe aufweisen, welche je nach der Größe der zweiten bzw. dritten Bohrung gewählt werden können.

Beispielsweise sind das jeweilige erste Verbindungselement als Exzenterscheibe und das jeweilige zweite Verbindungselement als insbesondere einteiliger Spannstift ausgestaltet, welche miteinander zum jeweiligen Verbindungselement kombiniert werden. Die Fertigung derartiger Exzenterscheiben kann für einen Nominalaußendurchmesser durch eine exzentrische dritte Bohrung erfolgen, so dass das Grundmaterial als Stangenmaterial bezogen werden kann. Während der Montage erfolgt anhand einer Messung die Auswahl der passenden Exzenterscheibe mit der passenden Exzentrizität.

Vorzugsweise wird die jeweilige dritte Bohrung in das jeweilige erste Verbindungselement am Herstellungsort der Maschinensegmente bzw. an einem Herstellungsort des jeweiligen ersten Verbindungselementes eingebracht. Prinzipiell ist auch denkbar, die jeweilige dritte Bohrung am Montage- und/oder Betriebsort der elektrischen Maschine einzubringen, wobei ein Einbringen von Metallspänen in die elektrische Maschine möglichst zu vermeiden ist.

Bei einer weiteren vorteilhaften Ausgestaltung der Erfindung wird dabei am Montage- und/oder Betriebsort eine zweite Mehrzahl von ersten Verbindungselementen mit unterschiedlichen Exzentrizitäten der jeweiligen dritten Bohrung bereitgehalten.

Durch die Bereithaltung der zweiten Mehrzahl von ersten Verbindungselementen am Montage- und/oder Betriebsort, wird eine reibungslose Montage der elektrischen Maschine gewährleistet, unabhängig davon, wie groß sich die einzelnen Exzentrizitäten darstellen. Die zweite Mehrzahl ist beispielsweise derart zu wählen, dass stets ein ausreichender Satz von geeigneten ersten Verbindungselementen vorrätig ist.

Insbesondere durch die Kombination von Exzenterscheiben mit insbesondere einteiligen Spannstiften entsteht eine Einstellmöglichkeit, so dass die Anzahl der unterschiedlichen Exzenter, die für die Montage vorzuhalten sind, verringert wird.

Vorzugsweise wird zusätzlich jeweils eine weitere Mehrzahl von unterschiedlich großen zweiten Verbindungselementen und von unterschiedlich großen ersten Verbindungselementen mit jeweils unterschiedlichen Exzentrizitäten am Montage- und/oder Betriebsort bereitgehalten.

Bei einer weiteren vorteilhaften Ausgestaltung der Erfindung ist das jeweilige erste Verbindungselement als Hülse, insbesondere als Spannhülse, ausgeführt.

Derartige Hülsen sind in großer Stückzahl und kostengünstig erhältlich, was hilft, Kosten zu sparen. Insbesondere wenn das jeweilige erste Verbindungselement als Spannhülse ausgeführt ist, ist es möglich, noch größere Fertigungstoleranzen vorzusehen, weil die Spannhülse für einen größeren Bereich von Bohrungsdurchmessern einsetzbar ist und dennoch ein fester Sitz der Spannhülse gewährleistet ist. Die größeren Fertigungstoleranzen erlauben wiederum Kosten einzusparen, ohne dadurch den Montageaufwand zu erhöhen.

Die Ausführung des jeweiligen ersten Verbindungselementes als Hülse bzw. Spannhülse ist dabei insbesondere auch für eine einstückige, zweistückige oder mehrstückige Ausführung des jeweiligen Verbindungselementes machbar.

Insbesondere bei elektrischen Großmaschinen, welche beispielsweise einen Außendurchmesser von mehreren Metern bzw. eine elektrische Leistung von mehreren Megawatt aufweisen, können auch größere Versätze der jeweiligen Bohrungen bzw. Stiftlöcher auftreten, welche durch die hülsenförmige Ausgestaltung des jeweiligen ersten Verbindungselementes möglichst vollständig kompensiert werden kann. Insbesondere ist durch Fertigungstoleranzen die Exzentrizität der verschiedenen Stiftbohrungen nicht konstant. Um die Anzahl der erforderlichen Hülsen zu begrenzen, werden vorteilhafterweise nicht massive Stifte, sondern Spannhülsen oder die weiter unten erläuterten Spannstifte verwendet, die eine gewisse Exzentrizität gestatten.

Bei einer weiteren vorteilhaften Ausgestaltung der Erfindung ist das jeweilige zweite Verbindungselement als massiver Stift ausgeführt.

Das als massiver Stift ausgeführte jeweilige zweite Verbindungselement weist vorteilhafte mechanische Eigenschaften auf und ist dabei kostengünstig erhältlich.

Bei einer alternativen vorteilhaften Ausgestaltung der Erfindung ist das jeweilige zweite Verbindungselement als Spannstift mit einem Exzenterteil ausgeführt.

Die Verwendung des als Spannstift ausgeführten jeweiligen zweiten Verbindungselementes erlaubt, größere Fertigungstoleranzen vorzusehen, weil der Spannstift für einen größeren Bereich von Bohrungsdurchmessern einsetzbar ist und dennoch ein fester Sitz des Spannstifts gewährleistet ist. Dabei ist der jeweilige Spannstift nicht komplett rotationssymmetrisch ausgestaltet, sondern weist eine gewisse Exzentrizität auf, welche von dem Exzenterteil herrührt. Dank der Exzentrizität des jeweiligen Spannstiftes wird eine noch größere Flexibilität bei der Verbindung zweier Maschinensegmente erreicht.

Derartige Spannstifte können beispielsweise einteilig ausgeführt werden, wobei das Exzenterteil und der Stiftteil auf einem Automaten preiswert gefertigt werden können. Weiterhin kann ein jeweiliger, derartiger Spannstift auch einteilig mit einer jeweiligen Exzenterscheibe ausgeführt werden, wodurch ebenfalls das oben erläuterte, einstückig ausgeführte Verbindungselement erhältlich ist, welches ein jeweiliges erstes Verbindungselement in Form des Spannstiftes und ein jeweiliges zweites Verbindungselement in Form der Exzenterscheibe aufweist.

Bei einer weiteren vorteilhaften Ausgestaltung der Erfindung wird dabei am Montage- und/oder Betriebsort eine dritte Mehrzahl von zweiten Verbindungselementen mit unterschiedlichen Exzentrizitäten des jeweiligen Exzenterteils bereitgehalten.

Das Bereithalten der dritten Mehrzahl von ersten Verbindungselementen am Montage- und/oder Betriebsort erlaubt eine reibungslose Montage der elektrischen Maschine, unabhängig davon, wie groß sich die einzelnen Exzentrizitäten darstellen. Die dritte Mehrzahl ist beispielsweise derart zu wählen, dass stets ein ausreichender Satz von geeigneten zweiten Verbindungselementen vorrätig ist.

Bei einer weiteren vorteilhaften Ausgestaltung der Erfindung wird das jeweilige Verbindungselement, insbesondere das jeweilige erste Verbindungselement und/oder das jeweilige zweite Verbindungselement, mittels einer Verdrehsicherung gegen ein Verdrehen gesichert.

Durch die Verdrehsicherung wird dauerhaft ein Auswandern bzw. Kriechen von verbundenen Maschinensegmenten relativ zueinander unterbunden. Insgesamt bietet das vorgeschlagene Verfahren bzw. die vorgeschlagene elektrische Maschine somit nicht nur den Vorteil einer vergleichsweise einfachen Montage, sondern erlaubt auch eine Konstruktion der elektrischen Maschine, welche sich durch eine besonders große mechanische Stabilität auch über vergleichsweise lange Zeiträume auszeichnet.

Bei einer weiteren vorteilhaften Ausgestaltung der Erfindung wird die Verdrehsicherung dabei durch ein Einpressen, ein Einklemmen und/oder oder eine Verschraubung des jeweiligen Verbindungselementes in die jeweilige Bohrung und/oder oder durch einen Körnerschlag erreicht.

Unter einem Körnerschlag wird dabei das Einbringen einer Körnung mittels eines Körners verstanden, so dass das jeweilige Verbindungselement und/oder das jeweilige Maschinensegment eine passend angeordnete, kleine Vertiefung und somit eine passend angeordnete, kleine Verformung aufweist bzw. aufweisen, wodurch eine Verdrehsicherung erreicht wird.

Bei einer weiteren vorteilhaften Ausgestaltung der Erfindung weist die elektrische Maschine einen Außendurchmesser von mindestens 3 m, insbesondere mindestens 5 m, auf, ist mit einer elektrischen Leistung von mindestens 1 MW, insbesondere mindestens 5 MW, betreibbar, und/oder ist als Ringmotor, Mühlenantrieb, insbesondere getriebeloser Mühlenantrieb, Fördermotor oder Generator, insbesondere als Windgenerator, ausgeführt.

Im Folgenden wird die Erfindung anhand der in den Figuren dargestellten Ausführungsbeispiele näher beschrieben und erläutert. Es zeigen:
- FIG 1: ein erstes Ausführungsbeispiel einer gemäß dem erfindungsgemäßen Verfahren montierten elektrischen Maschine,
- FIG 2: eine alternative Ansicht des ersten Ausführungsbeispiels der elektrischen Maschine,
- FIG 3: ein erstes Ausführungsbeispiel eines Verbindungselementes der erfindungsgemäßen elektrischen Maschine,
- FIG 4: ein zweites Ausführungsbeispiel einer gemäß dem erfindungsgemäßen Verfahren montierten elektrischen Maschine,
- FIG 5: ein zweites Ausführungsbeispiel eines Verbindungselementes der erfindungsgemäßen elektrischen Maschine,
- FIG 6: ein beispielhaftes Ablaufdiagramm des erfindungsgemäßen Verfahrens, und
- FIG 7: ein drittes Ausführungsbeispiel einer gemäß dem erfindungsgemäßen Verfahren montierten elektrischen Maschine.

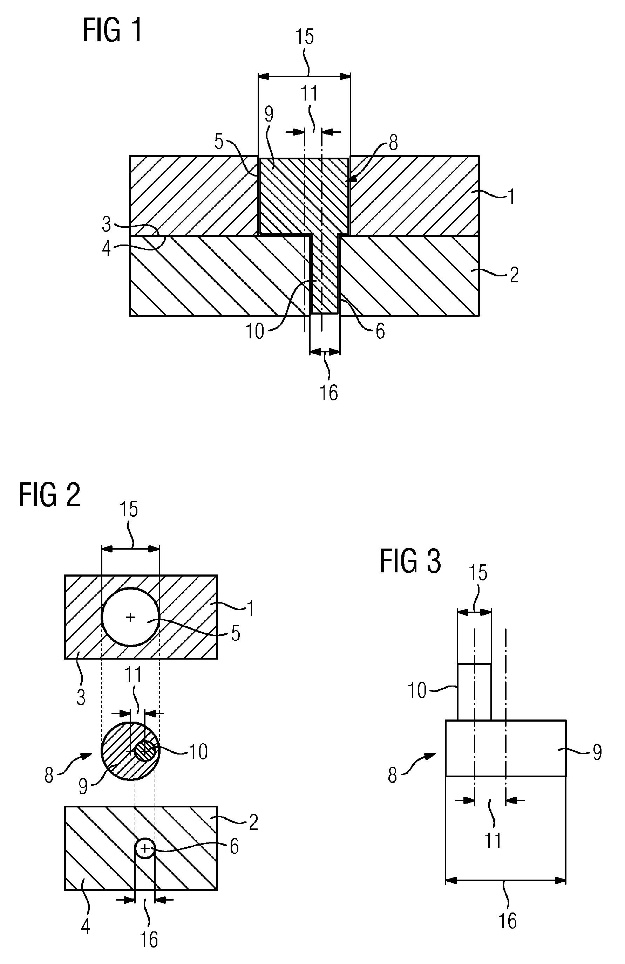

Figur 1 zeigt ein erstes Ausführungsbeispiel einer gemäß dem erfindungsgemäßen Verfahren montierten elektrischen Maschine, wobei ein Querschnitt dargestellt ist.

Die elektrische Maschine weist ein erstes Maschinensegment 1 und ein zweites Maschinensegment 2 auf, welche relativ zueinander an einer jeweiligen Segmentposition angeordnet sind. Das erste Maschinensegment 1 bzw. das zweite Maschinensegment 2 weist eine erste Anlagefläche 3 bzw. eine zweite Anlagefläche 4 auf. Die beiden Maschinensegmente 1 und 2 sind derart ausgestaltet, dass sie an ihrer jeweiligen Anlagefläche 3 bzw. 4 miteinander verbindbar sind, wenn das jeweilige Maschinensegment 1 bzw. 2 an seiner jeweiligen Segmentposition angeordnet ist.

Zur Montage der elektrischen Maschine wurden die beiden Maschinensegmente 1 und 2 in einem Verfahrensschritt S1 an einem Herstellungsort der beiden Maschinensegmente 1 und 2 hergestellt.

Während eines Verfahrensschrittes S2 wird am Herstellungsort eine erste Bohrung 5 in das erste Maschinensegment 1 im Bereich der ersten Anlagefläche 3 und eine zweite Bohrung 6 in das zweite Maschinensegment 2 im Bereich der zweiten Anlagefläche 4 eingebracht. Dabei weist die erste Bohrung 5 einen Durchmesser 15 auf, welcher größer ist als der Durchmesser 16 der zweiten Bohrung 6. Zusätzlich sind die erste Bohrung 5 und die zweite Bohrung 6 exzentrisch zueinander angeordnet, wenn das jeweilige Maschinensegment 1 bzw. 2 an seiner jeweiligen Segmentposition angeordnet ist, so dass die zweite Bohrung 6 bezüglich der ersten Bohrung 5 eine Exzentrizität 11 aufweist. Ist das jeweilige Maschinensegment 1 bzw. 2 an seiner jeweiligen Segmentposition angeordnet, ist die exzentrische Anordnung der beiden Bohrungen 5 und 6 relativ zueinander dabei derart, dass eine Projektion der ersten Bohrung 5 auf die zweite Anlagefläche 4 die jeweilige zweite Bohrung 6 vollständig abdeckt.

Gemäß einem Verfahrensschritt S3 werden das erste Maschinensegment 1 und das zweite Maschinensegment 2 zu einem Montage- und/oder Betriebsort der elektrischen Maschine transportiert.

In einem Verfahrensschritt S4 werden das erste Maschinensegment 1 und das zweite Maschinensegment 2 am Montage- und/oder Betriebsort an der jeweiligen Segmentposition angeordnet.

Gemäß einem Verfahrensschritt S5 werden das erste Maschinensegment 1 und das zweite Maschinensegment 2 am Montage- und/oder Betriebsort miteinander verbunden, indem ein Verbindungselement 8 in die erste Bohrung 5 und in die zweite Bohrung 6 eingebracht wird. Dabei weist das Verbindungselement 8 ein erstes Verbindungselement 9, welches in die erste Bohrung 5 eingebracht wird, und ein zweites Verbindungselement 10 auf, welches exzentrisch zum ersten Verbindungselement 9 angeordnet ist und in die zweite Bohrung 6 eingebracht wird.

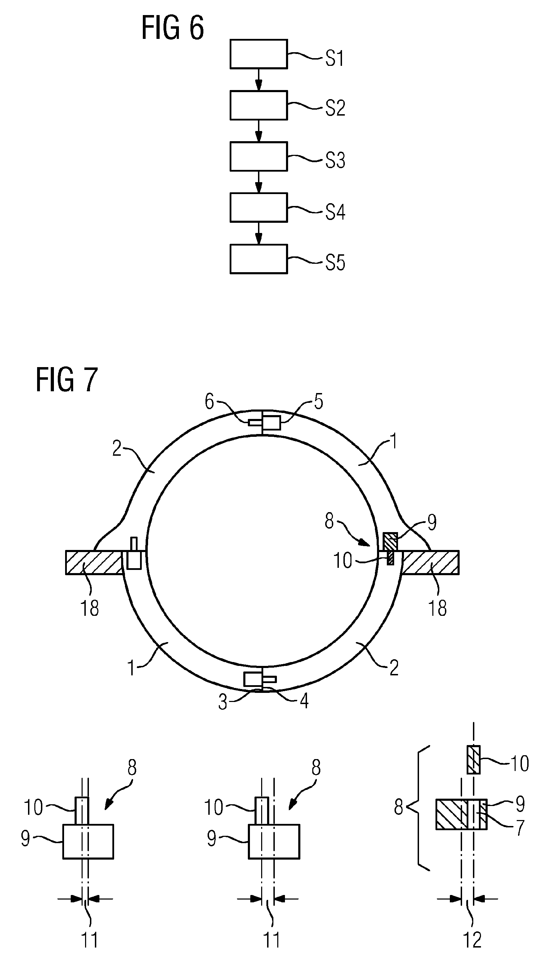

Die erläuterten Verfahrensschritte S1 bis S5 sind in einem beispielhaften Ablaufdiagramm in der Figur 6 dargestellt.

Das Verbindungselement 8 mit seinem ersten Verbindungselement 9 und einen zweiten Verbindungselement 10 kann dabei einstückig, zweistückig oder mehrstückig ausgeführt sein. Insbesondere kann das erste Verbindungselement 9 als Hülse, beispielsweise Spannhülse, ausgeführt sein. Das zweite Verbindungselement 10 kann beispielsweise als massiver Stift oder als Spannstift mit einem Exzenterteil ausgeführt sein.

Figur 2 zeigt eine alternative Ansicht des ersten Ausführungsbeispiels der elektrischen Maschine. Im Unterschied zu Figur 1 wird in Figur 2 eine Art Explosionsdarstellung gezeigt. Gleiche Bezugszeichen wie in Figur 1 bezeichnen dabei gleiche Gegenstände.

Figur 3 zeigt ein erstes Ausführungsbeispiel eines Verbindungselementes 8 der erfindungsgemäßen elektrischen Maschine.

Das Verbindungselement 8 weist ein erstes Verbindungselement 9 und ein zweites Verbindungselement 10 auf. In Verbindung mit dem ersten Ausführungsbeispiel der elektrischen Maschine ist das Verbindungselement 8 derart ausgestaltet, dass das erste Verbindungselement 9 in eine erste Bohrung 5 eines ersten Maschinenelementes 1 und das zweite Verbindungselement 10 in eine zweite Bohrung 6 eines zweiten Maschinenelementes 2 eingebracht werden können. Dabei ist das zweite Verbindungselement 10 relativ zum ersten Verbindungselement 9 exzentrisch angeordnet, wobei die Exzentrizität 11 im Wesentlichen jener der zweiten Bohrung 6 relativ zur ersten Bohrung 5 entspricht.

Das Verbindungselement kann einstückig, zweistückig oder mehrstückig ausgeführt sein. Insbesondere kann das erste Verbindungselement 9 als Hülse, beispielsweise Spannhülse, ausgeführt sein. Das zweite Verbindungselement 10 kann beispielsweise als massiver Stift oder als Spannstift mit einem Exzenterteil ausgeführt sein.

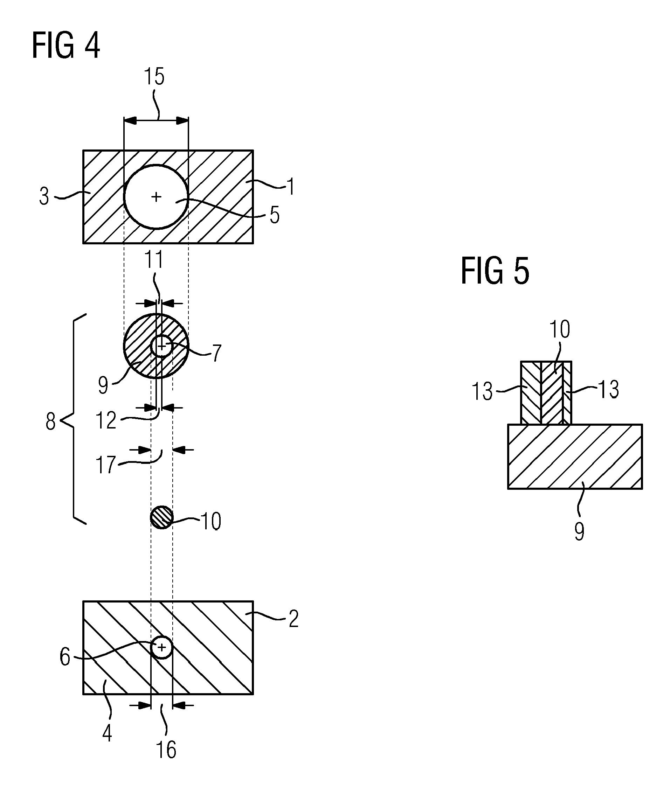

Figur 4 zeigt ein zweites Ausführungsbeispiel einer gemäß dem erfindungsgemäßen Verfahren montierten elektrischen Maschine, wobei eine ähnliche Ansicht wie bei Figur 2 dargestellt ist.

Im Unterschied zum ersten Ausführungsbeispiel der elektrischen Maschine weist das erste Verbindungselement 9 eine dritte Bohrung 7 mit einem Durchmesser 17 auf, welcher im Wesentlichen gleich groß wie der Durchmesser 16 der zweiten Bohrung 6 ist. Zur Verbindung des ersten Maschinensegmentes 1 mit dem zweiten Maschinensegment 2 wird das zweite Verbindungselement 10 am Montage- und/oder Betriebsort in die zweite Bohrung 6 und in die dritte Bohrung 7 eingebracht. Weiterhin wird das erste Verbindungselement 9 in die erste Bohrung 5 eingebracht.

Figur 5 zeigt ein zweites Ausführungsbeispiel eines Verbindungselementes 8 der erfindungsgemäßen elektrischen Maschine. Aus Gründen der Übersichtlichkeit wurde auf die Bezeichnung der unterschiedlichen Durchmesser und der Exzentrizität verzichtet.

Im Unterschied zum ersten Ausführungsbeispiel des Verbindungselementes 8 weist das zweite Verbindungselement 10 einen Spannstift mit einem Exzenterteil 13 auf, so dass eine besonders große Flexibilität bezüglich der Exzentrizität erreicht werden kann.

Figur 6 zeigt ein beispielhaftes Ablaufdiagramm des erfindungsgemäßen Verfahrens. Die Verfahrensschritte S1 bis S5 werden weiter oben beispielhaft für das erste Ausführungsbeispiel in der Figur 1 erläutert. Gegebenenfalls kann das Ablaufprogramm um zumindest einen weiteren Verfahrensschritt ergänzt werden, welcher jeweils insbesondere weiter oben schon erläutert wurde.

Figur 7 zeigt ein drittes Ausführungsbeispiel einer gemäß dem erfindungsgemäßen Verfahren montierten elektrischen Maschine.

Bei der elektrischen Maschine handelt es sich beispielsweise um einen Ringmotor. Die elektrische Maschine weist zwei erste Maschinensegmente 1 und zwei zweite Maschinensegmente 2 auf, welche beispielsweise als Gehäuse- oder Statorsegmente ausgeführt sein können. Die Lagerung der elektrischen Maschine wird dabei über Fundamente 18 erreicht, auf welchen eines der ersten Maschinensegmente 1 bzw. eines der zweiten Maschinensegmente 2 aufliegt.

Sind die jeweiligen Maschinensegmente 1 und 2 am Montage- und/oder Betriebsort an ihrer jeweiligen Segmentposition angeordnet, werden benachbarte erste Maschinensegmente 1 und zweite Maschinensegmente 2 mittels eines jeweiligen Verbindungselementes 8 verbunden. Hierzu weist das jeweilige erste Maschinensegment 1 je Verbindung zumindest eine erste Bohrung 6 und das jeweilige zweite Maschinensegment 2 je Verbindung zumindest eine zweite Bohrung 7 auf, wobei die jeweiligen Bohrungen 6 und 7 exzentrisch zueinander angeordnet sind. Das jeweilige Verbindungselement 8 wird während der Montage in die jeweilige erste Bohrung 6 und die jeweilige zweite Bohrung 7 eingebracht.

Zur Montage der elektrischen Maschine am Montage- und/oder Betriebsort werden vorzugsweise mehrere der Verbindungselemente 8 mit unterschiedlichen Exzentrizitäten 11 des jeweiligen zweiten Verbindungselementes 10 in Bezug zum jeweiligen ersten Verbindungselement 9 bereitgehalten. Sind eine oder mehrere der Verbindungselemente 8 mit einer jeweiligen dritten Bohrung 7 im jeweiligen ersten Verbindungselement 9 ausgestattet, so können am Montage- und/oder Betriebsort mehrere erste Verbindungselemente 9 mit unterschiedlichen Exzentrizitäten 12 der jeweiligen dritten Bohrung 7 sowie mehrere zweite Verbindungselemente 10 bereitgehalten werden.

Zusammenfassend betrifft die Erfindung ein Verfahren zur Montage einer elektrischen Maschine, wobei die elektrische Maschine zumindest zwei Maschinensegmente aufweist, welche relativ zueinander an einer jeweiligen Segmentposition angeordnet sind, wobei ein erstes Maschinensegment zumindest eine erste Anlagefläche und ein zweites Maschinensegment zumindest eine zweite Anlagefläche aufweisen, wobei das erste Maschinensegment und das zweite Maschinensegment derart ausgestaltet sind, dass das an seiner jeweiligen Segmentposition angeordnete erste Maschinensegment und zweite Maschinensegment an der jeweiligen ersten Anlagefläche und der jeweiligen zweiten Anlagefläche miteinander verbindbar sind. Weiterhin betrifft die Erfindung eine derartige elektrische Maschine. Um den Montageaufwand insbesondere für große, segmentierte elektrische Maschinen zu verringern, werden die folgenden Verfahrensschritte vorgeschlagen:
- Herstellen der zumindest zwei Maschinensegmente an einem Herstellungsort der zumindest zwei Maschinensegmente,
- Einbringen zumindest einer ersten Bohrung in das erste Maschinensegment im Bereich der jeweiligen ersten Anlagefläche und zumindest einer zweiten Bohrung in das zweite Maschinensegment im Bereich der jeweiligen zweiten Anlagefläche am Herstellungsort,
wobei die jeweilige erste Bohrung einen größeren Durchmesser als die jeweilige zweite Bohrung aufweist und die jeweilige erste Bohrung und die jeweilige zweite Bohrung derart exzentrisch zueinander angeordnet sind, dass bei einer Anordnung des jeweiligen Maschinensegmentes an der jeweiligen Segmentposition eine Projektion der jeweilige ersten Bohrung auf die zweite Anlagefläche die jeweilige zweite Bohrung vollständig abgedeckt,
- Transport der zumindest zwei Maschinensegmente zum Montage- und/oder Betriebsort der elektrischen Maschine,
- Anordnen des jeweiligen Maschinensegmentes an der jeweiligen Segmentposition am Montage- und/oder Betriebsort,
- Verbinden des ersten Maschinensegmentes mit dem zweiten Maschinensegment durch Einbringung eines jeweiligen Verbindungselementes in die jeweilige erste Bohrung und die jeweilige zweite Bohrung am Montage- und/oder Betriebsort,
wobei das jeweilige Verbindungselement ein jeweiliges erstes Verbindungselement, welches in die jeweilige erste Bohrung eingebracht wird, und ein jeweiliges zweites Verbindungselement aufweist, welches exzentrisch zum ersten Verbindungselement angeordnet ist und in die jeweilige zweite Bohrung eingebracht wird. Weiterhin wird vorgeschlagen, dass zumindest eine erste Bohrung in das erste Maschinensegment im Bereich der jeweiligen ersten Anlagefläche und zumindest eine zweite Bohrung in das zweite Maschinensegment im Bereich der jeweiligen zweiten Anlagefläche eingebracht sind, wobei die jeweilige erste Bohrung einen größeren Durchmesser als die jeweilige zweite Bohrung aufweist und die jeweilige erste Bohrung und die jeweilige zweite Bohrung derart exzentrisch zueinander angeordnet sind, dass bei einer Anordnung des jeweiligen Maschinensegmentes an der jeweiligen Segmentposition eine Projektion der jeweilige ersten Bohrung auf die zweite Anlagefläche die jeweilige zweite Bohrung vollständig abgedeckt, wobei die elektrische Maschine ein jeweiliges Verbindungselement aufweist, mittels welchem das erste Maschinensegment mit dem zweiten Maschinensegment verbunden ist, indem das jeweilige Verbindungselement in die jeweilige erste Bohrung und die jeweilige zweite Bohrung eingebracht ist, wobei das jeweilige Verbindungselement ein jeweiliges erstes Verbindungselement, welches in die jeweilige erste Bohrung eingebracht ist, und ein jeweiliges zweites Verbindungselement aufweist, welches exzentrisch zum ersten Verbindungselement angeordnet ist und in die jeweilige zweite Bohrung eingebracht ist.

## Patentansprüche

1. Verfahren zur Montage einer elektrischen Maschine,
wobei die elektrische Maschine zumindest zwei Maschinensegmente (1, 2) aufweist, welche relativ zueinander an einer jeweiligen Segmentposition angeordnet sind,
wobei ein erstes Maschinensegment (1) zumindest eine erste Anlagefläche (3) und ein zweites Maschinensegment (2) zumindest eine zweite Anlagefläche (4) aufweisen,
wobei das erste Maschinensegment (1) und das zweite Maschinensegment (2) derart ausgestaltet sind, dass das an seiner jeweiligen Segmentposition angeordnete erste Maschinensegment (1) und zweite Maschinensegment (2) an der jeweiligen ersten Anlagefläche (3) und der jeweiligen zweiten Anlagefläche (4) miteinander verbindbar sind,
mit den folgenden Verfahrensschritten:
- Herstellen der zumindest zwei Maschinensegmente (1, 2) an einem Herstellungsort der zumindest zwei Maschinensegmente (1, 2),
- Einbringen zumindest einer ersten Bohrung (5) in das erste Maschinensegment (1) im Bereich der jeweiligen ersten Anlagefläche (3) und zumindest einer zweiten Bohrung (6) in das zweite Maschinensegment (2) im Bereich der jeweiligen zweiten Anlagefläche (4) am Herstellungsort,
wobei die jeweilige erste Bohrung (5) einen größeren Durchmesser (15) als die jeweilige zweite Bohrung (6) aufweist und die jeweilige erste Bohrung (5) und die jeweilige zweite Bohrung (6) derart exzentrisch zueinander angeordnet sind, dass bei einer Anordnung des jeweiligen Maschinensegmentes (1, 2) an der jeweiligen Segmentposition eine Projektion der jeweiligen ersten Bohrung (5) auf die jeweilige zweite Anlagefläche (4) die jeweilige zweite Bohrung (6) vollständig abgedeckt,
- Transport der zumindest zwei Maschinensegmente (1, 2) zum Montage- und/oder Betriebsort der elektrischen Maschine,
- Anordnen des jeweiligen Maschinensegmentes (1, 2) an der jeweiligen Segmentposition am Montage- und/oder Betriebsort,
- Verbinden des ersten Maschinensegmentes (1) mit dem zweiten Maschinensegment (2) durch Einbringung eines jeweiligen Verbindungselementes (8) in die jeweilige erste Bohrung (5) und die jeweilige zweite Bohrung (6) am Montage- und/oder Betriebsort,
wobei das jeweilige Verbindungselement (8) ein jeweiliges erstes Verbindungselement (9), welches in die jeweilige erste Bohrung (5) eingebracht wird, und ein jeweiliges zweites Verbindungselement (10) aufweist, welches exzentrisch zum ersten Verbindungselement (9) angeordnet ist und in die jeweilige zweite Bohrung (6) eingebracht wird.

2. Verfahren nach Anspruch 1,
wobei am Montage- und/oder Betriebsort eine erste Mehrzahl von Verbindungselementen (8) mit unterschiedlichen Exzentrizitäten (11) des jeweiligen zweiten Verbindungselementes (10) in Bezug zum jeweiligen ersten Verbindungselement (9) bereitgehalten wird.

3. Verfahren nach Anspruch 1,
wobei das jeweilige Verbindungselement (9) und das jeweilige zweite Verbindungselement (10) des jeweiligen Verbindungselementes (8) zweistückig oder mehrstückig ausgeführt sind, wobei das jeweilige erste Verbindungselement (9) eine jeweilige dritte Bohrung (7) aufweist, welche im Wesentlichen den gleichen Durchmesser (17) wie die jeweilige zweite Bohrung (6) aufweist,
wobei das jeweilige erste Verbindungselement (9) derart in die jeweilige erste Bohrung (5) eingebracht wird, dass eine Projektion der jeweiligen dritten Bohrung (7) auf die zweite Anlagefläche (4) mit der jeweiligen zweiten Bohrung (6) im Wesentlichen in Deckung kommt,
wobei das erste Maschinensegment (1) mit dem zweiten Maschinensegment (2) durch Einbringung des jeweiligen zweiten Verbindungselementes (10) in die jeweilige zweite Bohrung (6) und die jeweilige dritte Bohrung (7) am Montage- und/oder Betriebsort verbunden wird.

4. Verfahren nach Anspruch 3,
wobei am Montage- und/oder Betriebsort eine zweite Mehrzahl von ersten Verbindungselementen (9) mit unterschiedlichen Exzentrizitäten (12) der jeweiligen dritten Bohrung (7) bereitgehalten wird.

5. Verfahren nach einem der vorhergehenden Ansprüche,
wobei das jeweilige erste Verbindungselement (9) als Hülse, insbesondere als Spannhülse, ausgeführt ist.

6. Verfahren nach einem der vorhergehenden Ansprüche,
wobei das jeweilige zweite Verbindungselement (10) als massiver Stift ausgeführt ist.

7. Verfahren nach einem der Ansprüche 1-5,
wobei das jeweilige zweite Verbindungselement (10) als Spannstift mit einem Exzenterteil (13) ausgeführt ist.

8. Verfahren nach Anspruch 7,
wobei am Montage- und/oder Betriebsort eine dritte Mehrzahl von zweiten Verbindungselementen (10) mit unterschiedlichen Exzentrizitäten (14) des jeweiligen Exzenterteils (13) bereitgehalten wird.

9. Verfahren nach einem der vorhergehenden Ansprüche,
wobei das jeweilige Verbindungselement (8), insbesondere das jeweilige erste Verbindungselement (9) und/oder das jeweilige zweite Verbindungselement (10), mittels einer Verdrehsicherung gegen ein Verdrehen gesichert wird.

10. Verfahren nach Anspruch 9,
wobei die Verdrehsicherung durch ein Einpressen, ein Einklemmen und/oder oder eine Verschraubung des jeweiligen Verbindungselementes in die jeweilige Bohrung und/oder oder durch einen Körnerschlag erreicht wird.

11. Elektrische Maschine aufweisend
- zumindest zwei Maschinensegmente (1, 2), welche relativ zueinander an einer jeweiligen Segmentposition angeordnet sind,
wobei ein erstes Maschinensegment (1) zumindest eine erste Anlagefläche (3) und ein zweites Maschinensegment (2) zumindest eine zweite Anlagefläche (4) aufweisen,
wobei das erste Maschinensegment (1) und das zweite Maschinensegment (2) derart ausgestaltet sind, dass das an seiner jeweiligen Segmentposition angeordnete erste Maschinensegment (1) und zweite Maschinensegment (2) an der jeweiligen ersten Anlagefläche (3) und der jeweiligen zweiten Anlagefläche (4) miteinander verbindbar sind,
wobei zumindest eine erste Bohrung (5) in das erste Maschinensegment (1) im Bereich der jeweiligen ersten Anlagefläche (3) und zumindest eine zweite Bohrung (6) in das zweite Maschinensegment (2) im Bereich der jeweiligen zweiten Anlagefläche (4) eingebracht sind,
wobei die jeweilige erste Bohrung (5) einen größeren Durchmesser (15) als die jeweilige zweite Bohrung (6) aufweist und die jeweilige erste Bohrung (5) und die jeweilige zweite Bohrung (6) derart exzentrisch zueinander angeordnet sind, dass bei einer Anordnung des jeweiligen Maschinensegmentes (1, 2) an der jeweiligen Segmentposition eine Projektion der jeweiligen ersten Bohrung (5) auf die jeweilige zweite Anlagefläche (4) die jeweilige zweite Bohrung (6) vollständig abgedeckt,
- ein jeweiliges Verbindungselement (8), mittels welchem das erste Maschinensegment (1) mit dem zweiten Maschinensegment (2) verbunden ist, indem das jeweilige Verbindungselement (8) in die jeweilige erste Bohrung (5) und die jeweilige zweite Bohrung (6) eingebracht ist,
wobei das jeweilige Verbindungselement (8) ein jeweiliges erstes Verbindungselement (9), welches in die jeweilige erste Bohrung (5) eingebracht ist, und ein jeweiliges zweites Verbindungselement (10) aufweist, welches exzentrisch zum ersten Verbindungselement (9) angeordnet ist und in die jeweilige zweite Bohrung (6) eingebracht ist.

12. Elektrische Maschine nach Anspruch 11,
wobei das jeweilige erste Verbindungselement (9) und das jeweilige zweite Verbindungselement (10) des jeweiligen Verbindungselementes (8) zweistückig oder mehrstückig ausgeführt sind,
wobei das jeweilige erste Verbindungselement (9) eine jeweilige dritte Bohrung (7) aufweist, welche im Wesentlichen den gleichen Durchmesser (17) wie die jeweilige zweite Bohrung (6) aufweist,
wobei das jeweilige erste Verbindungselement (9) derart in die jeweilige erste Bohrung (5) eingebracht ist, dass eine Projektion der jeweiligen dritten Bohrung (7) auf die zweite Anlagefläche (4) mit der jeweiligen zweiten Bohrung (6) im Wesentlichen in Deckung ist,
wobei das erste Maschinensegment (1) mit dem zweiten Maschinensegment (2) durch Einbringung des jeweiligen zweiten Verbindungselementes (10) in die jeweilige zweite Bohrung (6) und die jeweilige dritte Bohrung (7) verbunden ist.

13. Elektrische Maschine nach Anspruch 11 oder 12,
wobei die elektrische Maschine
- einen Außendurchmesser von mindestens 3 m, insbesondere mindestens 5 m, aufweist,
- mit einer elektrischen Leistung von mindestens 1 MW, insbesondere mindestens 5 MW, betreibbar ist, und/oder
- als Ringmotor, Mühlenantrieb, insbesondere getriebeloser Mühlenantrieb, Fördermotor oder Generator, insbesondere als Windgenerator, ausgeführt ist.
